# EUROPÄISCHE PATENTANMELDUNG

(11) **EP 1 922 933 A1**
(43) Veröffentlichungstag der Anmeldung: **21.05.2008**
(21) Anmeldenummer: 06023684.1
(22) Anmeldetag: 14.11.2006
(51) Int. Cl.: A21D 13/00, A23L 1/06, A23L 1/30, A23L 1/39, A23L 2/06

(54) **Nahrungsmittel enthaltend einen Olivenextrakt**

(71) Anmelder: DSM IP Assets B.V., 6411 TE Heerlen (NL)
(72) Erfinder: Siebrecht, Philipp, 79114 Freiburg (DE)
(74) Vertreter: Teipel, Stephan

(57) **Zusammenfassung**

Die vorliegende Erfindung betrifft die Verwendung eines Olivenextraktes enthaltend mindestens etwa 5 Gew.% Polyphenole und mindestens etwa 2 Gew.-% Hydroxytyrosol in Nahrungsmitteln, und Nahrungsmitteln enthaltend den Olivenextrakt.

## Beschreibung

Die Erfindung betrifft die Verwendung eines Olivenextraktes in Nahrungsmitteln, insbesondere Getränke und Backwaren, und die Nahrungsmittel enthaltend den Olivenextrakt.

Olivenöl ist aus Oliven, den Früchten des Olivenbaumes (Olea Europea), erhältlich und ein beliebtes Nahrungsmittel, besonders in mediterranen Ländern. Grund der steigenden Beliebtheit des Olivenöls ist die Erkenntnis, dass diverse Inhaltsstoffe in der Olive, insbesondere Polyphenole, sich gesundheitsfördernd bei dem Verzehr dieser auf den Menschen auswirken. Der Verzehr von Olivenöl wurde u. a. mit dem niedrigeren Auftreten von Herz-Kreislauf-Erkrankungen und von bestimmten Krebsarten wie Brustkrebs, Prostata-, Eierstock- und Dickdarmkrebs in Verbindung gebracht. Als Ursache hierfür wird der Anteil an Polyphenolen in dem Olivenöl angeführt, insbesondere Oleuropein und Derivate davon, dessen Hydrolyse zu kleineren phenolischen Verbindungen, z.B. auch Hydroxytyrosol, führt.

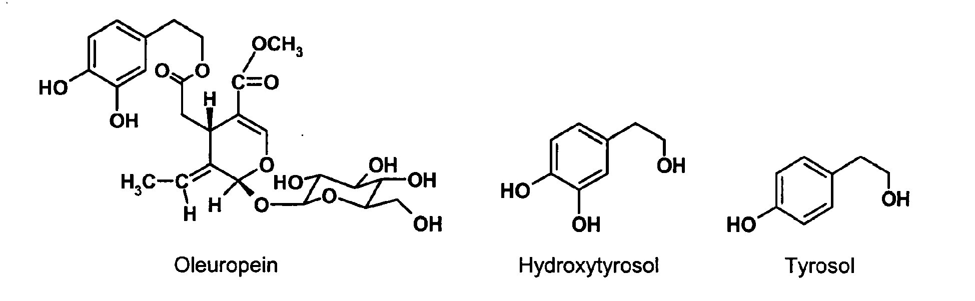

Diese Verbindungen zeigen alle chemoprotektive Aktivität. Insbesondere das in den Oliven und dem Olivenöl enthaltene Hydroxytyrosol ist dafür bekannt, dass es u. a. die Oxidation des LDL-Lipoproteins und die Blutplättchenaggregration verhindern kann und weitere positive Effekte auf den Körper bewirkt. Als Grund für die vorteilhafte Wirkung der Polyphenole wird deren starke antioxidative Wirksamkeit angegeben.

Bei der gewöhnlichen Olivenölproduktion wird die Olive mitsamt des Kernes oder bereits entkernt zu einer Paste vermahlen. Hierbei wird die Olivenpaste konstant mit Wasser gewaschen, was als "Malaxation" bekannt ist. Die Paste wird anschließend mechanisch gepresst, um die flüssigen Inhaltsstoffe zu gewinnen. Auf diese Weise wird neben dem Olivenöl auch der in der Olive enthaltene wässrige Anteil erhalten, der vom Öl abgetrennt wurde. Zusammen mit dem Wasser der Waschvorgänge ergibt sich eine wässrige Phase, die insgesamt als Waschwasser oder "vegetation water" bezeichnet wird. Dieses Waschwasser enthält neben den wasserlöslichen Anteilen der Olive auch gewisse Teile der polyphenolischen Inhaltsstoffe, die nur schwach wasserlöslich sind. Aus diesen Waschwassern kann u. a. ein Olivenextrakt gewonnen werden, der hohe Anteile an Polyphenolen und Hydroxytyrosol enthält. Um den Anteil an ebenfalls enthaltenem Oleuropein, das auch zum bitteren, oliventypischen Geschmack des Olivenöls beiträgt, zu reduzieren, werden die Waschwasser angesäuert, wodurch das Oleuropein über längere Zeiträume, z.B. Monate, u. a. zu Hydroxytyrosol hydrolysiert wird.

So beschreibt die WO 02/18310 ein Verfahren zur Herstellung einer Zusammensetzung, die reich an Hydroxtyrosol ist, wobei das Waschwasser bei der Herstellung von Olivenöl mit Säure bis zu einem pH von 1 - 5 versetzt wird und die angesäuerte Waschwasserlösung mindestens 2 Monate inkubiert wird, bis mindestens 75 % des Oleuropeins in Hydroxytyrosol umgesetzt worden ist.

Ein Verfahren zur Herstellung der Waschwässer aus Oliven wird auch in WO 00/04794 beschrieben. Diese Druckschrift beschreibt daneben auch ein Nahrungsergänzungsmittel, das einen Olivenextrakt enthaltend Oleuropein umfasst, der im Wesentlichen frei von monophenolischen Verbindungen aus Olivenkernen ist. Das Nahrungsergänzungsmittel kann gemäß dieser Druckschrift in Form einer Tablette, Kapsel, Pille oder einer Nahrungszusatzmischung für Süßwaren ("confection food additive") vorliegen.

Obwohl der Gehalt an Oleuropein in den Olivenextrakten durch Hydrolyse stark reduziert wird, bleibt ein bitterer und olivenartiger Geschmack der Extrakte, bzw. der Lösungen der entsprechenden Pulver des Olivenextrakts bestehen. So können bereits unter Verwendung eines Olivenextraktes enthaltend ca. 6 Gew.-% Polyphenole und 2,5 Gew.-% Hydroxytyrosol bei einer Konzentration von 12 mg des Olivenextrakts in 240 ml Wasser geschmackliche Abweichungen von einer Probe reinen Wassers von Testpersonen erkannt werden. Typischerweise wird ab einer Menge von ca. 75 mg des Olivenextrakts auf 240 ml Wasser ein olivenartiger Geschmack erkannt. Bereits ab 120 mg des Olivenextrakts auf 240 ml Wasser wird ein unangenehmer bitterer Geschmack wahrgenommen. Ab einer Menge von etwa 480 mg des Olivenextrakts auf 240 ml Wasser ist die Bitterkeit nicht mehr erträglich. Ein entsprechendes Getränk wäre für den Verbraucher inakzeptabel.

Um dem Körper eine ausreichende Menge an Antioxidantien, z.B. in Form von Polyphenolen der Olive, zuzuführen, sollten jedoch etwa 400 mg des Olivenextraktes, der etwa 6 % Polyphenole und etwa 2,5 % Hydroxytyrosol enthält, täglich aufgenommen werden. Eine wässrige Verdünnung eines derartigen Olivenextraktes bzw. eine Lösung des entsprechenden Pulvers in Wasser wird, genauso wenig wie die Verabreichung in Form einer Tablette, Kapsel oder dergleichen auf Grund der Bitterkeit des Extraktes vom Verbraucher jedoch nicht angenommen.

Es besteht somit ein Bedarf an einer verzehrfähigen Form des Olivenextraktes mit seiner ausgezeichneten antioxidativen Wirkung, die diese Nachteile des Standes der Technik, insbesondere die Bitterkeit des Geschmacks, nicht aufweist. Überraschenderweise wurde festgestellt, dass ein Olivenextrakt, der mindestens etwa 5 Gew.-% Polyphenole und mindestens etwa 2 Gew.-% Hydroxytyrosol und ggf. Zitronensäure als Stabilisator enthält, vorteilhaft in Nahrungsmitteln, insbesondere in Backwaren und Getränken eingebracht werden kann, wobei diese für den Verbraucher zum Verzehr akzeptabel bleiben.

Die Erfindung betrifft somit Nahrungsmittel gemäß Ansprüchen 1 - 6 und die Verwendung eines entsprechenden Olivenextraktes zur Herstellung von Nahrungsmitteln gemäß den Ansprüchen 7 bis 15.

Die vorliegende Erfindung betrifft Nahrungsmittel, insbesondere Getränke und Backwaren, die einen Olivenextrakt, der mindestens etwa 5 Gew.-%, vorzugsweise etwa 5,5 Gew.-% bis 6,5 Gew.-%, insbesondere etwa 6 Gew.-% Polyphenole und mindestens etwa 2 Gew.-%, vorzugsweise etwa 2 Gew.-% bis 3 Gew.-%, insbesondere etwa 2,5 Gew.-% Hydroxytyrosol, jeweils bezogen auf das Gesamtgewicht der Getränke bzw. Backwaren, und ggf. eine Säure, insbesondere Zitronensäure, als Stabilisator enthalten. In den erfindungsgemäßen Getränken und Backwaren ist der Olivenextrakt bei Getränken, vorzugsweise Getränken, die Zitronensäure enthalten, mindestens etwa 0,05 Gew.-%, vorzugsweise etwa 0,05 Gew.-% bis 0,5 Gew.-%, insbesondere etwa 0,05 Gew.-% bis 0,25 Gew.-% und in den Backwaren mindestens etwa 0,2 Gew.-%, vorzugsweise etwa 0,2 Gew.-% bis 0,5 Gew.-%, insbesondere etwa 0,2 Gew.-% bis 0,45 Gew.-%, jeweils bezogen auf das Gesamtgewicht der Getränke bzw. der Backwaren, enthalten.

Vorzugsweise enthalten die Getränke und Backwaren der vorliegenden Erfindung etwa 200 bis 400 mg des Olivenextraktes in der täglich aufgenommenen Menge der Getränke und Backwaren. Die täglich aufgenommene Menge der Getränke und Backwaren entspricht etwa 2 bis 4 Portionen, vorzugsweise 2 Portionen, der Getränke und Backwaren, wobei eine Portion bei Getränken etwa 200 - 300 ml, insbesondere etwa 250 ml und bei Backwaren etwa 30 - 70 g, insbesondere etwa 50 g beträgt.

Zur Herstellung der erfindungsgemäßen Getränke und Backwaren können bekannte Mischungen und Rezepte des Standes der Technik verwendet werden, denen eine entsprechende Menge des Olivenextraktes beigemischt wird. So enthalten die erfindungsgemäßen Getränke den Olivenextrakt, da hierdurch vorteilhaft die in dem Olivenextrakt enthaltenen Antioxidiantien dem Körper zugeführt werden können, ohne dass das Getränk einen bitteren Geschmack enthält, der vom Verbraucher abgelehnt werden würde. Die erfindungsgemäßen Backwaren enthalten Olivenextrakt, wodurch Backwaren erhalten werden können, die eine hohe Menge an den in dem Olivenextrakt enthaltenen Antioxidiantien aufweisen. Hierdurch kann der Verbraucher vorteilhaft mit der empfohlenen Menge an Antioxidiantien von etwa 400 mg des Olivenextraktes auf einfache Weise jeden Tag versorgt werden, ohne dass die Backwaren für den Verbraucher auf Grund eines unangenehmen Geschmacks inakzeptabel wären.

Im Stand der Technik bekannte Olivenbrote enthalten meist nur etwa 6 - 10 g Oliven pro 40 g Mehl, was der Menge eines Brötchens entspricht. Aus Oliven werden durchschnittlich nur etwa 0,1 Gew.-%, bezogen auf die Olive an Polyphenol und etwa 0,05 Gew.-% bezogen auf die Olive an Hydroxytyrosol aufgenommen. Pro im Stand der Technik bekannten Olivenbrötchen werden somit etwa 6 mg bis maximal 10 mg an Polyphenol und etwa 3 mg bis maximal 5 mg an Hydroxytyrosol zur Verfügung gestellt. Ein erfindungsgemäßes Brötchen kann demgegenüber z.B. 200 mg Olivenextrakt pro 40 g Mehl enthalten. Ein derartiges erfindungsgemäßes Brötchen stellt somit mindestens etwa 12 mg an Polyphenol und mindestens etwa 5 mg an Hydroxytyrosol zur Verfügung, ohne unangenehm bitter und zu stark olivenartig zu schmecken.

Besonders bevorzugt enthalten die Getränke und Backwaren der vorliegenden Erfindung den Olivenextrakt in einer Menge, das die täglich üblicherweise aufgenommene Menge des Getränks oder der Backware etwa 200 mg bis 400 mg, insbesondere etwa 400 mg des Olivenextraktes enthält. So kann der Verbraucher vorteilhaft seinen Bedarf an etwa 400 mg des Olivenextraktes bereits über ein einziges Nahrungsmittel sichern.

Weiter betrifft die Erfindung die Verwendung eines Olivenextraktes zur Herstellung von Nahrungsmitteln. Nach der erfindungsgemäßen Verwendung enthält der Olivenextrakt mindestens etwa 5 Gew.-%, vorzugsweise etwa 5,5 Gew.-% bis 6,5 Gew.-%, z.B. etwa 6 Gew.-% Polyphenole, vorzugsweise mindestens etwa 2 Gew.-%, vorzugsweise etwa 2,0 Gew.-% bis 3,0 Gew.-%, insbesondere etwa 2,5 Gew.-% Hydroxytyrosol und ggf. eine Zitronensäure als Stabilisator und wird bevorzugt in Form eines Pulvers verwendet. Der Olivenextrakt enthält zur erfindungsgemäßen Verwendung bevorzugt geringe Mengen an Oleuropein, das z.B. über säurekatalysierte Hydrolyse in Hydroxytyrosol umgewandelt werden kann, so dass mehr bevorzugt in dem Olivenextrakt das Gewichtsverhältnis von Hydroxytyrosol zu Oleuropein von 1 : 1 bis 200 : 1, vorzugsweise von 5 : 1 bis 100 : 1, insbesondere etwa 10 : 1 bis 50 : 1 beträgt. Ebenfalls beträgt bevorzugt das Gewichtsverhältnis von Hydroxytyrosol zu Tyrosol in dem Olivenextrakt bevorzugt 3 : 1 bis 50 : 1, insbesondere 5 : 1 bis 30 : 1.

Unter Polyphenolen werden im Rahmen der vorliegenden Erfindung Verbindungen, die teilweise aromatisch sind, mit mehr als einer an den aromatischen Ringen gebundenen Hydroxylgruppe verstanden. Bevorzugt sind solche Polyphenole, wie sie aus Oliven gewonnen werden können. Die Gesamtmenge der erfindungsgemäß verwendeten Polyphenole schließt die Gesamtmenge an Hydroxytyrosol mit ein.

Der Olivenextrakt, der erfindungsgemäß verwendet wird, kann wie oben beschrieben, in vorteilhafter Weise aus den Waschwassern bei der Olivenölproduktion gewonnen werden. Durch ausreichendes Entfernen des Wassers kann das Waschwasser eingedickt werden oder in Form eines Pulvers gebracht werden, das teilweise, jedoch nicht vollständig, wasserlöslich ist. Durch die wasserunlöslichen Anteile des Olivenextraktes tritt eine leichte Trübung beim Lösen des Pulvers in Wasser auf. Der hierdurch erhältliche erfindungsgemäß verwendete Olivenextrakt enthält typischerweise etwa 6 Gew.-% Polyphenole und etwa 2,5 Gew.-% Hydroxytyrosol und wird vorzugsweise durch Zitronensäure stabilisiert. Besonders bevorzugt wird als Olivenextrakt HIDROX® 6 % eingesetzt. Dieses kommerziell erhältliche Produkt ist ein pulverförmiger Olivenextrakt und enthält mindestens 6 Gew.-% Polyphenole und mindestens 2,5 Gew.-% Hydroxytyrosol.

In einer bevorzugten erfindungsgemäßen Verwendung des Olivenextraktes sind in dem Nahrungsmittel über 200 mg des Olivenextraktes, vorzugsweise 200 mg bis 400 mg, z.B. etwa 400 mg des Olivenextraktes pro Portion des Nahrungsmittels enthalten. Ein Portion des Nahrungsmittels entspricht etwa ¼ bis ½ der Menge des Nahrungsmittels, die täglich aufgenommen wird. Vorzugsweise werden 2 - 4, mehr bevorzugt 2 Portionen des Nahrungsmittels typischerweise täglich aufgenommen. Für die Nahrungsmittel Getränke und Backwaren ist eine Portion somit etwa 200 - 300 ml, insbesondere 250 ml bei dem Getränk und etwa 30 - 70 g, insbesondere 50 g bei den Backwaren.

Besonders bevorzugt ist die erfindungsgemäße Verwendung des Olivenextraktes in Getränken, die Zitronensäure enthalten. Dies sind z.B. Orangensaft, Zitronensaft, Grapefruitsaft, bzw. entsprechende Nektare, Fruchtsaftgetränke oder Limonaden, die einen sauren Geschmack aufweisen. Vorzugsweise sind unter den Getränken auch solche aus Getränkepulvern und -konzentraten umfasst.

Der Olivenextrakt, der auf Grund seines Anteils an antioxidativ wirkenden Polyphenolen gesundheitsförderlich ist, kann erfindungsgemäß in Getränken, insbesondere solchen, die Zitronensäure enthalten, verwendet werden, ohne dass der bittere Geschmack selbst bei einer Konzentration von über 200 mg des Olivenextraktes auf etwa 250 ml des Getränkes unangenehm auffällt. Somit kann erreicht werden, dass bereits über die Aufnahme von 2 - 4 Portionen, vorzugsweise 2 Portionen eines Getränks, das den Olivenextrakt enthält, die täglich empfohlene Menge von etwa 400 mg des Olivenextraktes im Körper auf geschmacklich angenehme Weise zugeführt werden, ohne dass der Verbraucher auf Grund des bitteren oder olivenartigen Geschmacks das Getränk ablehnt.

Weiter bevorzugt ist die erfindungsgemäße Verwendung des Olivenextraktes in Backwaren. Als solche Backwaren kommen vorzugsweise Weißbrot, Mischbrot, Vollkornbrot, Ciabattabrot, und entsprechende Brötchen, aber auch Cerialienriegel in Betracht. So kann bei einem Mischbrot in einer Portion von etwa 50 g Brot etwa 150 - 250 mg, vorzugsweise etwa 200 mg des Olivenextraktes eingebacken werden, ohne dass ein bitterer Geschmack beim Verzehr signifikant wahrgenommen würde. Bei einem Ciabattabrot, z.B. in Form einer Ciabattarolle von etwa 100 g kann ebenfalls problemlos etwa 150 - 250 mg, vorzugsweise etwa 200 mg des Olivenextraktes eingemischt werden, ohne dass ein bitterer Geschmack signifikant in Erscheinung treten würde. In ein handelsübliches Vollkornbrot von etwa 500 g, was etwa 4 Portionen (ä 3 Scheiben) entspricht, kann sogar problemlos etwa 1,4 - 1,8 g, vorzugsweise etwa 1,6 g des Olivenextraktes eingemischt werden, ohne dass ein bitterer Geschmack beim Verzehr signifikant auftreten würde. Als Backwaren, in denen der Olivenextrakt erfindungsgemäß verwendet werden kann, sind ebenfalls Cerealienriegel umfasst. Diesen Cerealienriegeln von einer Masse von etwa 35 g kann etwa 125 - 175 mg, vorzugsweise etwa 150 mg des Olivenextrakts beigemischt werden, ohne dass ein signifikant wahrnehmbarer bitterer Geschmack beim Verzehr dieser auftreten würde.

Des Weiteren betrifft die vorliegende Erfindung die Verwendung des Olivenextraktes in Pestos, Chutneys und Nudelsaucen. Bevorzugt basieren die erfindungsgemäßen Pestos, Chutneys und Nudelsaucen nicht auf Tomaten. Bevorzugt nicht umfasst von der vorliegenden Erfindung sind Brotaufstriche, Salatdressings und Tomatensaucen.

Die Erfindung wird durch die folgenden Beispiele weiter veranschaulicht:

### Beispiel 1

### Weißbrot enthaltend Olivenextrakt

Zusammensetzung des Weißbrotes:

| Inhaltsstoff | Masse (g) |
|---|---|
| Weizenmehl, Typ 550 | 988,8 |
| Wasser | 680 |
| Bäckerhefe | 50 |
| Salz | 20 |
| Olivenextrakt (6 Gew.-% Polyphenole, 2,5 Gew.-% Hydroxytyrosol) (z.B. HIDROX^{®}) | 11,2 |

### Herstellung

Die Hefe wird in einem Teil des Wassers aufgelöst und alle Inhaltsstoffe einschließlich dem Olivenextrakt werden zusammen zu einem Teig vermischt. Das Salz wird während des Knetens zugegeben. Nach gewissem Stehenlassen und Weiterbearbeiten wird der Teig geteilt, bevor die Leiber geformt werden. Diese werden vor dem Backen mit Wasser bestrichen.

Kneten
- Spiralknetesystem: 5 Minuten 1. Stufe (Zugabe des Salzes nach 3 Minuten), 3 Minuten 2. Stufe
- Gehenlassen des Teigs 30 Minuten
- Teigtemperatur 22 - 24° C
- Gehenlassen des Laibes 20 Minuten.

### Backen

- Ofentyp MIWE condo DS, Michael Wenz, D-97450 Ahrenstein, Germany
- Backtemperatur oben 250° C, unten 220° C
- Backzeit 40 Minuten
- Programm: 1) 12 Minuten 250° C Oberhitze, mittlere Flammen, Schwadenschieber zu, Schwaden 3, 220° C Unterhitze
   2) 18 Minuten 240° C Oberhitze, mittlere Flammen, Schwadenschieber aus, Umluft an, 220°C Unterhitze 3) 10 Minuten 220° C Oberhitze, mittlere Flammen, Schadenschieber aus, Umluft an, 220° C Unterhitze

### Beispiel 2

Hidrox-Vollkornbrot
- Teigart:: Vollkornbrot
- Inhaltsstoffe:: Wasser, Roggenvollkornmehl, Weizenvollkornmehl, Sonnenblumenkerne, ganze Roggenkörner, Leinsamen, getrockneter Sauerteig, Brotbrösel, Roggenmalz, Salz, Hefe
- Gewicht:: 530 g (TG 600 g)
- Besonderheiten:: Ein Brot enthält 1,2 g HIDROX^{®}. Bei 12 Scheiben pro Brot enthält 1 Scheibe ca. 100 mg HIDROX^{®}. Die empfohlene Tagesdosis für HIDROX^{®} (Olivenextrakt) beträgt 2 x 200 mg. 4 Scheiben Brot decken den Tagesbedarf.

### Beispiel 3

Hidrox-Ciabatta
- Teigart:: Ciabattateig
- Inhaltsstoffe:: Weizenmehl, Wasser, Peperoni oder Oliven, Hartweizengries,Weizensauerteig, Salz, Hefe, Olivenöl, Weizenmalzmehl, Weizenkleber, Traubenzucker, Ascorbinsäure, Enzyme
- Gewicht:: 100 g (Teiggewicht (TG) ca. 150 g)
- Besonderheiten:: Ein Gebäck enthält ca. 200 mg HIDROX^{®} (13,3 g auf 10.000 g Teig) Die empfohlene Tagesdosis für HIDROX^{®} (Olivenextrakt) beträgt 2 x 200 mg. 2 Ciabatta decken den Tagesbedarf an HIDROX^{®}.

### Beispiel 4

### "Crystal Light" Limonadengetränk

Eine Gallone (ca. 3,785 Liter) einer Olivenextrakt-haltigen Limonade wurde unter Vermengen von 1,92 g des Olivenextraktes (z.B. HIDROX^{®}), enthaltend 6 Gew.-% Polyphenole und 2,5 Gew.-% Hydroxytyrosol, mit zwei Tabletten von "Crystal Light" Trockenlimonadengetränk (1 Tablette für 1/2 Gallone) und anschließender Zugabe von einer Gallone (ca. 3,785 Liter) Wasser und Rühren von Hand hergestellt. Eine Portion ä 240 ml enthält somit etwa 120 mg des Olivenextraktes.

Die Limonade wies einen angenehmen Geschmack ohne einen signifikant wahrnehmbaren olivenartigen Beigeschmack auf.

### Beispiel 5

### Grapefruitgetränk aus einem Fertiggetränkepulver mit Grapefruit-Geschmack

Zusammensetzung des Fertiggetränkepulvers mit Grapefruit-Geschmack:

| **Inhaltsstoff** | **Masse in g** |
|---|---|
| Saccharose | 10 |
| Glucose | 3,5 |
| Fructose | 3,5 |
| Maltodextrin | 3,5 |
| Süßstoff (Twinsweet) | 0,05 |
| Wasserfreie Zitronensäure | 3 |
| Grapefruit-Geschmack | 0,4 |
| Grapefruit-Pulver | 9 |
| Carboxymethylcellulose | 0,5 |
| Wasserfreies Trinatriumcitrat | 0,4 |
| Tricalciumphosphat | 0,3 |
| BC 1 % CWS | 0,025 |
| Natriumchlorid | 0,5 |
| Calciumlaktat | 1,36 |
| Magnesiumcitrat | 1,5 |
| Kaliumphospha | 0,87 |
| Vitamin B1 (Thiamin) | 0,004 |
| Vitamin B2 (Riboflavin) | 0,005 |
| Vitamin B6 (Pyridoxin) | 0,005 |
| Vitamin C | 0,4 |
| Olivenextrakt (6 Gew.-% Polyphenole und 2,5 Gew.-% Hydroxytyrosol) (z.B. HIDROX^{®}) | 0,8 |
| Gesamt | 40 |

Das Getränk mit Grapefruit-Geschmack wird durch Auflösen von 40 g des angegebenen Pulvers in 500 ml kaltem Wasser hergestellt. 500 ml des Getränks enthalten 48 mg Polyphenole und 20 mg Hydroxytyrosol, und das Getränk weist einen angenehmen Grapefruit-Geschmack auf.

## Patentansprüche

1. Nahrungsmittel, enthaltend einen Olivenextrakt, der mindestens etwa 5 Gew.-% Polyphenole und mindestens etwa 2 Gew.-% Hydroxytyrosol, bezogen auf das Gesamtgewicht des Nahrungsmittels, enthält.

2. Nahrungsmittel gemäß Anspruch 1, wobei die Nahrungsmittel Getränke und Backwaren, Pestos, Chutneys oder Nudelsaucen sind.

3. Nahrungsmittel gemäß Anspruch 1 oder 2, **dadurch gekennzeichnet, dass** das Gewichtsverhältnis von Hydroxytyrosol zu Oleuropein in dem Olivenextrakt 5 : 1 bis 200 : 1 beträgt.

4. Nahrungsmittel gemäß einem der vorigen Ansprüche, **dadurch gekennzeichnet, dass** das Gewichtsverhältnis von Hydroxytyrosol zu Tyrosol in dem Olivenextrakt von 3 : 1 bis 50 : 1 beträgt.

5. Nahrungsmittel gemäß Ansprüchen 2 - 4, **dadurch gekennzeichnet, dass** die Getränke mindestens 0,05 Gew.-% des Olivenextraktes, bezogen auf das Gesamtgewicht des Getränks, und die Backwaren mindestens 0,2 Gew.-% des Olivenextraktes, bezogen auf das Gesamtgewicht der Backwaren, enthalten.

6. Nahrungsmittel gemäß einem der Ansprüche 2-5, **dadurch gekennzeichnet, dass** in etwa 250 ml des Getränks oder in etwa 50 g der Backwaren etwa 200 bis 400 mg des Olivenextraktes enthalten sind.

7. Verwendung eines Olivenextraktes enthaltend mindestens etwa 5 Gew.-% Polyphenole und mindestens etwa 2 Gew.-% Hydroxytyrosol zur Herstellung von Nahrungsmitteln.

8. Verwendung eines Olivenextraktes gemäß Anspruch 7, wobei die Nahrungsmittel Getränke, Backwaren, Pestos, Chutneys oder Nudelsaucen sind.

9. Verwendung eines Olivenextraktes gemäß einem der Ansprüche 7 oder 8, der Zitronensäure als Stabilisator enthält.

10. Verwendung eines Olivenextraktes gemäß einem der Ansprüche 7 - 9, **dadurch gekennzeichnet, dass** der Olivenextrakt in Form eines Pulvers verwendet wird.

11. Verwendung eines Olivenextraktes gemäß einem der Ansprüche 7 - 10, **dadurch gekennzeichnet, dass** das Gewichtsverhältnis von Hydroxytyrosol zu Oleuropein in dem Olivenextrakt von 5 : 1 bis 200 : 1 beträgt.

12. Verwendung eines Olivenextraktes gemäß einem der Ansprüche 7 - 11, **dadurch gekennzeichnet, dass** das Gewichtsverhältnis von Hydroxytyrosol zu Tyrosol in dem Olivenextrakt von 3 : 1 bis 50 : 1 beträgt.

13. Verwendung des Olivenextraktes gemäß einem der Ansprüche 8 - 12, **dadurch gekennzeichnet, dass** die Getränke mindestens 0,05 Gew.-% des Olivenextraktes, bezogen auf das Gesamtgewicht des Getränks, und die Backwaren mindestens 0,2 Gew.-% des Olivenextraktes, bezogen auf das Gesamtgewicht der Backwaren, enthalten.

14. Verwendung gemäß einem der Ansprüche 8 - 13, wobei die Nahrungsmittel Getränke und Backwaren aus Fertiggetränkepulvern bzw. Fertigbackmischungen sind.

15. Verwendung gemäß einem der Ansprüche 8 - 14, wobei die Getränke Zitronensäure enthalten.
